# EUROPEAN PATENT SPECIFICATION

(11) **EP 4 075 072 B1**
(45) Date of publication and mention of the grant of the patent: **25.06.2025**
(21) Application number: 20899338.6
(22) Date of filing: 30.10.2020
(51) Int. Cl.: F24F 11/63, F24F 11/46, F24F 120/12, F24F 11/30, F24F 11/65, G05B 19/042

(54) **AIR CONDITIONER SYSTEM**
KLIMAANLAGENSYSTEM
SYSTÈME DE CLIMATISEUR

(30) Priority: 09.12.2019 KR 20190162755
(43) Date of publication of application: 19.10.2022
(73) Proprietor: LG Electronics Inc., SEOUL 07336 (KR)
(72) Inventor: PARK, Jungil, Seoul 08592 (KR)
(74) Representative: Vossius & Partner Patentanwälte Rechtsanwälte mbB
(86) International application number: PCT/KR2020/015033
(87) International publication number: WO 2021/118058

(56) References cited:
- WO-A1-2016/009541
- WO-A1-2019/003639
- JP-A- 2010 038 375
- KR-A- 20070 052 993
- KR-A- 20090 080 745
- KR-B1- 102 001 936
- KR-B1- 102 001 936
- US-A1- 2015 277 409
- US-A1- 2018 045 427

## Description

### Technical Field

The present disclosure relates to an air conditioner system and an operating method thereof, and more particularly, to an air conditioner system and an operating method thereof, which efficiently operate according to circumstances in residential, lodging, and office buildings having a plurality of air-conditioning spaces.

### Background Art

Lodging facilities such as hotels, collective living spaces such as offices, houses, schools, and hospitals, and buildings provide necessary services to users. For example, lighting and heating, ventilation, air conditioning (HVAC) are representative facility systems that provide services.

As buildings are enlarged and automated, a building management system (BMS) that integrates and manages facility systems is being used. However, the number of systems and devices managed by the building management system (BMS) is increasing, and in the case of large buildings, it is very large. Therefore, for the building management system (BMS) to communicate and directly check and control the state in relation to all states and operations of all devices, the performance and speed of the system may decrease and the cost may increase.

Meanwhile, energy consumption in the building sector is expected to further increase due to the increase in building size and the pursuit of convenience. Therefore, when the energy used in the building is reduced, the total energy consumption can also be greatly reduced.

Recently, in order to reduce energy consumption of a building while maintaining a comfortable environment so that users do not feel uncomfortable, research on intelligent control methods to provide the necessary instantaneous service as much as necessary for lighting, heating and cooling systems is increasing. In particular, a building includes a plurality of air-conditioning spaces, and efficient heating and cooling in each air-conditioning space may have a significant impact on energy efficiency.

Korea Patent Laid-Open Publication No. 1994-0003237 describes a system that is installed at the front of a hotel to integrally manage room service and energy-saving devices in a guest room, in which power supply for energy saving, a cooling device, a heating device, and air conditioning is turned on and off using contact control. In Korean Patent Laid-Open Publication No. 1994-0003237, only on/off of the devices can be controlled using the contact control, and thus, there is a limit to achieving optimized air conditioning and energy efficiency.

Korean Patent Laid-Open Publication No. 10-2012-0106049 relates to a guest room card key detection device and a guest room control system, which detect a card key of a guest who enters a guest room and cuts off the power supply to the guest room device. In Korean Patent Laid-Open Publication No. 10-2012-0106049, only the entire power supply can be turned on/off depending on whether the card key of a customer is detected, and thus, there is a limit to achieving optimized air conditioning and energy efficiency. In addition, when the card key is detected but the customer actually is not in the guest room, energy is wasted.

US 2015/277409 A1 relates to an air-conditioning system according to the preamble of claim 1, including an air-conditioning apparatus, a user information input terminal, and a central management apparatus. The user information input terminal detects entrance of a user into a room and transmits an entrance-interlocking signal including user identification information for identifying the user to the central management apparatus.

US 2018/045427 A1 relates to an air-conditioning control apparatus including an away detector, a position acquisition unit, a distance acquisition unit, an instrument control unit, and a learning storage unit. The away detector detects that a user is away from a building. The position acquisition unit acquires position information of a portable terminal carried by the user.

WO 2019/003639 A1 relates to an air conditioning control device which is provided with: a registration information acquisition unit for acquiring registration information in which user identification information and requested environment settings are associated with each other; an image acquisition unit for acquiring image data about the inside of a room; a position information acquisition unit for matching the image data against the identification information to acquire position information in which the position in the room where the user is located is identified; and an indoor unit control unit for controlling an air conditioning indoor unit on the basis of the requested environment settings and the position information.An object of the present disclosure is to provide an air conditioner system and an operating method thereof that efficiently operate according to circumstances in residential, lodging, and office buildings having a plurality of air-conditioning spaces.

An object of the present disclosure is to improve energy efficiency of a building and provide an optimized air conditioning service suitable for the situation.

An object of the present disclosure is to provide an air conditioner system capable of improving communication efficiency and reliability with a building management system and an operating method thereof.

### SUMMARY

In order to achieve the objects and other objects, according to the present invention, there is provided an air conditioner system as defined in claim 1. Preferred embodiments are defined in the dependent claims.

An air conditioning system according to the present invention includes: a central controller configured to obtain building entry information of a user associated with a predetermined space inside a building; and an indoor unit disposed in the predetermined space and configured to transmitting whether the user is in the predetermined space to the central controller, in which the central controller controls the indoor unit so that the indoor unit is operated in an operation mode corresponding to whether the user enters the building and whether the user is in the predetermined space. Therefore, the air conditioner system can be operated in an optimal operation mode by combining whether a user enters the building and whether the user is in the predetermined space.

Meanwhile, when the user is in the building and in the predetermined space, the indoor unit is operated in a first mode in which a set value is predetermined for a predetermined number of setting items among setting items set in relation to the indoor.

Moreover, the predetermined number of setting items may be selected based on a frequency of use.

The frequency of use may be based on an indoor unit operation history of the user or an operation history of a plurality of indoor unit units in the building.

In addition, the set value may be based on an indoor unit operation history of the user or an operation history for a plurality of indoor units in the building.

Furthermore, the indoor unit is operated in a second mode that consumes less energy than the first mode when the user is in the building and is not in the predetermined space.

In addition, the indoor unit is operated in a third mode in which energy consumption is minimal among a plurality of operation modes when the user is not in the building.

Meanwhile, the indoor unit may determine whether the user is in a room through a provided camera or sensor or determine whether the user in the room based on sensing information received from an exterior presence detection sensor.

When the building may be a lodging facility and the predetermined space is a guest room, the indoor unit may determine whether the user is in the guest room based on whether a guest room card key is sensed from a guest room card key sensing device.

Meanwhile, the central controller may acquire the building entry information of the user from a building management system.

According to at least one of embodiments of the present invention, it is possible to provide an air conditioner system that efficiently operates according to circumstances in residential, lodging, or office building having a plurality of air-conditioning spaces.

In addition, according to at least one of the embodiments of the present embodiment, it is possible to improve energy efficiency of a building and provide an air conditioning service optimized for a situation.

In addition, according to at least one of the embodiments of the present invention, it is possible to improve communication efficiency and reliability with the building management system.

Meanwhile, various other effects will be disclosed directly or implicitly in the detailed description according to one embodiment of the present invention to be described later.

### BRIEF DESCRIPTION OF THE DRAWINGS

FIG. 1 is a diagram illustrating a configuration of an air conditioner according to one embodiment of the present invention.
FIG. 2 is a schematic diagram of an outdoor unit and an indoor unit of FIG. 1.
FIG. 3 is a block diagram schematically illustrating a control configuration of the indoor unit according to one embodiment of the present invention.
FIG. 4 is a conceptual diagram of an air conditioner system according to one embodiment of the present invention.
FIG. 5 illustrates an example of information transmission between the air conditioner system and a building management system according to one embodiment of the present invention.
FIG. 6 illustrates an operation mode for each situation of the air conditioner system according to one embodiment of the present invention.
FIG. 7 is an example of a setting user interface screen of the operation mode of the air conditioner system according to one embodiment of the present invention.
FIG. 8 is a diagram referenced in the description of the setting of the operation mode of the air conditioner system according to one embodiment of the present invention.
FIG. 9 is a flowchart illustrating a method of operating the air conditioner system according to one embodiment of the present invention.

### DESCRIPTION OF EXEMPLARY EMBODIMENTS

Hereinafter, one embodiment of the present disclosure will be described in detail with reference to the accompanying drawings. However, the present invention is not limited to the embodiment and may be modified in various forms.

Meanwhile, suffixes "module" and "portion" for the components used in the following description are given only in consideration of the ease of writing the present specification, and do not give a particularly important meaning or role by themselves. Accordingly, the terms "module" and "portion" may be used interchangeably.

Also, in this specification, terms such as first and second may be used to describe various elements, but these elements are not limited by these terms. These terms are only used to distinguish one element from another.

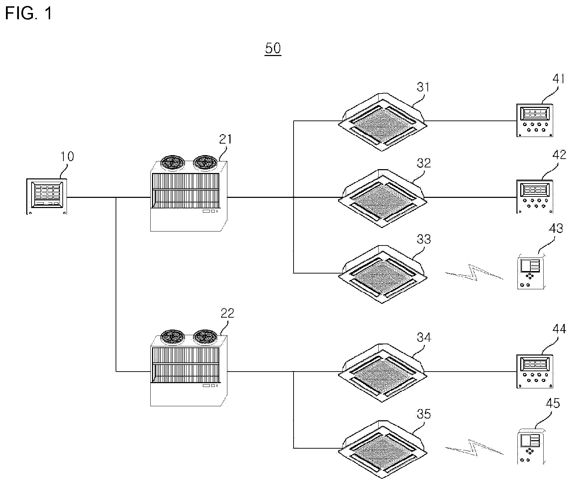

FIG. 1 is a diagram illustrating a configuration of an air conditioner according to one embodiment of the present invention.

Referring to FIG. 1, an air conditioner 50 according to one embodiment of the present invention may include a plurality of units. For example, the air conditioner 50 according to one embodiment of the present disclosure may include indoor units 31 to 35, outdoor units 21 and 22 connected to the indoor units 31 to 35, and remote controls 41 to 45 connected to the indoor units 31 to 35.

In addition to the indoor units and the outdoor units, the air conditioner system may include a ventilation device, an air purifier, a humidifier, a heater, and the like, and may further include units such as a chiller, an air conditioning unit, and a cooling tower depending on the scale. In the air conditioner system, the units are interconnected to each other to operate in conjunction with the operations of the indoor unit and the outdoor unit. In addition, the air conditioner system may operate in connection with a mobile device, a security device, an alarm device, and the like inside the building.

In addition, the air conditioner 50 according to one embodiment of the present invention may further include a central controller 10 for controlling the plurality of indoor units 31 to 35 and outdoor units 21 and 22.

The central controller 10 may be connected to the plurality of indoor units 31 to 36 and the plurality of outdoor units 21 and 22 to monitor and control the operations thereof. In this case, the central controller 10 may be connected to the plurality of indoor units to perform operation setting, lock setting, schedule control, group control, and the like for each indoor unit.

Each of the outdoor units 21 and 22 includes a compressor (not illustrated) that receives and compresses a refrigerant, an outdoor heat exchanger (not illustrated) that exchanges heat between the refrigerant and outdoor air, an accumulator (not illustrated) that extracts a gaseous refrigerant from the supplied refrigerant and supplies the extracted gaseous refrigerant to the compressor, and a four-way valve (not illustrated) for selecting a refrigerant flow path according to the heating operation. In addition, each outdoor unit may further include a plurality of sensors, a valve, an oil recovery unit, and the like.

The outdoor units 21 and 22 operate the provided compressor and outdoor heat exchanger to compress or heat-exchange the refrigerant according to a setting to supply the refrigerant to the indoor units 31 to 35.

The outdoor units 21 and 22 are driven by the request of the central controller 10 or the indoor units 31 to 35, and as the cooling/heating capacity is changed in response to the driven indoor unit, the number of operated outdoor units and the number of operated compressors installed in the outdoor unit are changed.

In this case, the outdoor units 21 and 22 are described on the basis of supplying refrigerant to the indoor units to which the plurality of outdoor units are respectively connected. However, the plurality of outdoor units may be connected to each other to supply the refrigerant to the plurality of indoor units according to the connection structure of the outdoor unit and the indoor unit.

The indoor units 31 to 35 are connected to any one of the plurality of outdoor units 21 and 22, receive refrigerant, and discharge hot and cold air into the room. The indoor units 31 to 35 include an indoor heat exchanger (not illustrated), an indoor unit fan (not illustrated), an expansion valve (not illustrated) through which the supplied refrigerant is expanded, and a plurality of sensors (not illustrated).

In this case, the outdoor units 21 and 22 and the indoor units 31 to 35 are connected by a communication line to transmit and receive data, and the outdoor unit and the indoor unit are connected to the central controller 10 by a separate communication line and operated according to the control of the central controller 10.

The remote controllers 41 to 45 may be respectively connected to the indoor units, input a control command of a user to the indoor units, and receive and display state information of the indoor units. In this case, the remote control communicates by wire or wirelessly depending on a connection type with the indoor unit, and in some cases, one remote control is connected to the plurality of indoor units, and the setting of the plurality of indoor units may be changed through one remote control input.

Meanwhile, according to an embodiment, the remote controllers 41 to 45 may include various sensors such as a temperature sensor therein.

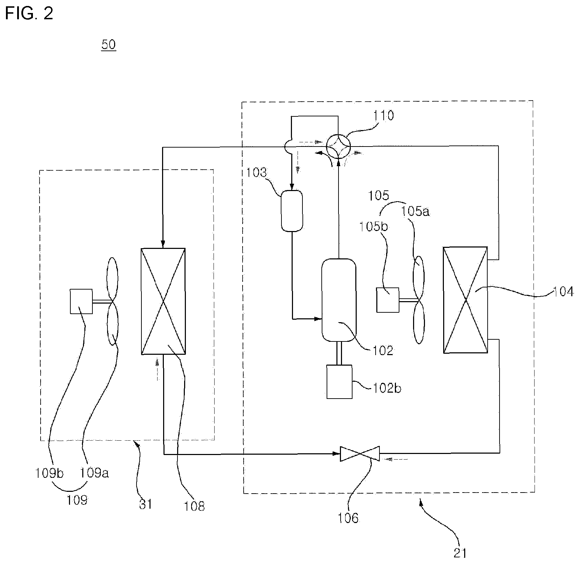

FIG. 2 is a schematic diagram of the outdoor unit and the indoor unit of FIG. 1.

Referring to FIG. 2, the air conditioner 50 is largely divided into an indoor unit 31 and an outdoor unit 21.

The indoor unit 31 includes an indoor heat exchanger 108 that is disposed indoors to perform a cooling/heating function, and an indoor blower 109 including an indoor fan 109a that is disposed on one side of the indoor heat exchanger 108 to promote heat dissipation of the refrigerant, and an indoor unit and an electric motor 109b for rotating the indoor fan 109a.

At least one indoor heat exchanger 108 may be installed. At least one of an inverter compressor and a constant speed compressor may be used as the compressor 102.

In addition, the air conditioner 50 may be configured as an air conditioner for cooling the room, or may be configured as a heat pump for cooling or heating the room.

The outdoor unit 21 includes a compressor 102 for compressing a refrigerant, a compressor electric motor 102b for driving the compressor, an outdoor heat exchanger 104 for radiating heat from the compressed refrigerant, an outdoor blower 105 including an outdoor fan 105a disposed on one side of the heat exchanger 104 to promote heat dissipation of the refrigerant and an electric motor 105b rotating the outdoor fan 105a, an expansion mechanism 106 for expanding the condensed refrigerant, a cooling/heating switching valve 110 for changing a flow path of the compressed refrigerant, an accumulator 103 for temporarily storing the vaporized refrigerant to remove moisture and foreign substances and then supplying the refrigerant having a constant pressure to the compressor, and the like.

Meanwhile, although FIG. 2 illustrates one indoor unit 31 and one outdoor unit 21, the driving device of the air conditioner according to the present disclosure is not limited thereto, and the present disclosure is applicable to a multi-type air conditioner having a plurality of indoor units and outdoor units, an air conditioner including one indoor unit and a plurality of outdoor units, and the like.

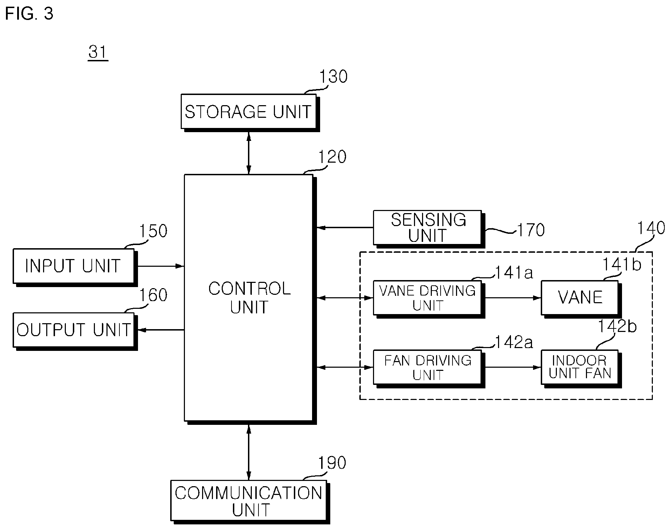

FIG. 3 is a block diagram schematically illustrating a control configuration of the indoor unit according to one embodiment of the present invention.

Referring to FIG. 3, the indoor unit 100 may include a driving unit 140, a sensing unit 170, an output unit 160, an input unit 150, a storage unit 130, a communication unit 180, and a control unit 120 for controlling the overall operation.

Control data for controlling the operation of the unit 100, communication data for address or group setting for communication with other units, data transmitted and received from the outside, and operation data generated or detected during operation are stored in the storage unit 130. The storage unit 130 stores an execution program for each function of the unit, data for operation control, and data to be transmitted/received.

In terms of hardware, the storage unit 130 may be various storage devices such as ROM, RAM, EPROM, flash drive, and hard drive.

The communication unit 180 may include one or more communication modules to be communicatively connected to an external device.

The input unit 150 includes at least one input means such as a button, a switch, and a touch input unit. When a user command or predetermined data is input in response to manipulation of the input means, the input unit 150 applies the input data to the control unit 120.

The output unit 160 may output the operating state of the unit including at least one of a lamp that is controlled to be turned on or off, an audio output unit having a speaker outputting a predetermined sound, and a display. The lamp outputs whether the unit is operating according to whether the lamp is lit, the lighting color, and whether it is flickering, and the speaker outputs a predetermined warning sound and sound effect to output the operating state. The display may output a menu screen for controlling the unit, and output a guide message or warning including a combination of at least one of letters, numbers, and images for operation settings or operating states of the unit.

The sensing unit 170 may include a plurality of sensors. The sensing unit 170 may include a pressure sensor, a temperature sensor, a gas sensor, a humidity sensor, and a flow rate sensor.

For example, a plurality of temperature sensors are provided to detect an indoor temperature, an outdoor temperature, an indoor heat exchanger temperature, an outdoor heat exchanger temperature, and a pipe temperature, and input the detected temperatures to the control unit 120. The pressure sensors are respectively installed at the inlet and outlet of the refrigerant pipe, measure the pressure of the introduced refrigerant and the pressure of the discharged refrigerant, respectively, and input the measured pressures to the control unit 120. The pressure sensor may be installed in the refrigerant pipe as well as the water pipe.

The sensing unit 170 may include a camera sensor. The camera sensor may photograph an air-conditioning space in which the indoor unit 31 is disposed. The indoor unit 31 may recognize an image acquired through a camera sensor to recognize a user, an object, a space, and the like.

According to one embodiment, the sensing unit 170 may include an occupancy detection sensor that detects whether a person is present in the air-conditioning space in which the indoor unit 31 is disposed.

The driving unit 140 supplies operating power to a control target according to a control command of the control unit 120 and controls the driving thereof.

The driving unit 140 may include, for example, a vane driving unit 141a, a fan driving unit 142a, an indoor unit fan 142b, and one or more vanes 141b.

The indoor unit fan 142b discharges the cold and hot air heat-exchanged by the heat exchanger into the room through the outlet.

The fan driving unit 142a controls driving of a motor that operates the indoor unit fan 142b. The fan driver 142a controls on/off of the indoor unit fan 142b in response to a control signal from the control unit 110 and controls the indoor unit fan 142b to operate at a set speed.

The vane driving unit 141a controls opening and closing of one or more vanes 141b provided in one or more outlets in response to a control signal from the control unit 110. In addition, the vane driving unit 141a controls the opening angle of each of the vanes 141b to change the discharged wind direction. The opening angle of the vane 141b is changed by the vane driving unit 141a to change the wind direction of the discharged air. In this case, each outlet may further include a louver for adjusting a wind direction in a right-left direction.

Each of the vanes 141b may have an opening angle set within a range of 0° to 90°, and the opening angle may be changed step by step according to the setting.

The vane driving unit 141a may change the opening angle of each vane 141b step by step according to a control command of the control unit 110 to set the opening angle.

For example, the vane driving unit 141a may control the opening angle of the vane in 5 steps within the range of 15° to 75° in units of 15°. The opening angle of the vane 141b may be set in 3 to 9 steps according to the setting. In addition, the vane driving unit 141a may continuously change the opening angle of the vane within the range of 15° to 75° without step division when setting a swing mode.

According to one embodiment of the present invention, a plurality of units included in the air conditioner system may be distributed on at least two or more floors. For example, the outdoor unit may be disposed on the roof of a building, and the indoor unit may be disposed on any floor inside the building. Moreover, a plurality of indoor units may be dispersedly arranged on several floors.

In addition, one or more indoor units may be arranged in a predetermined space. For example, one indoor unit may be arranged in one room having a small space, and N indoor units may be arranged in one room having a large space.

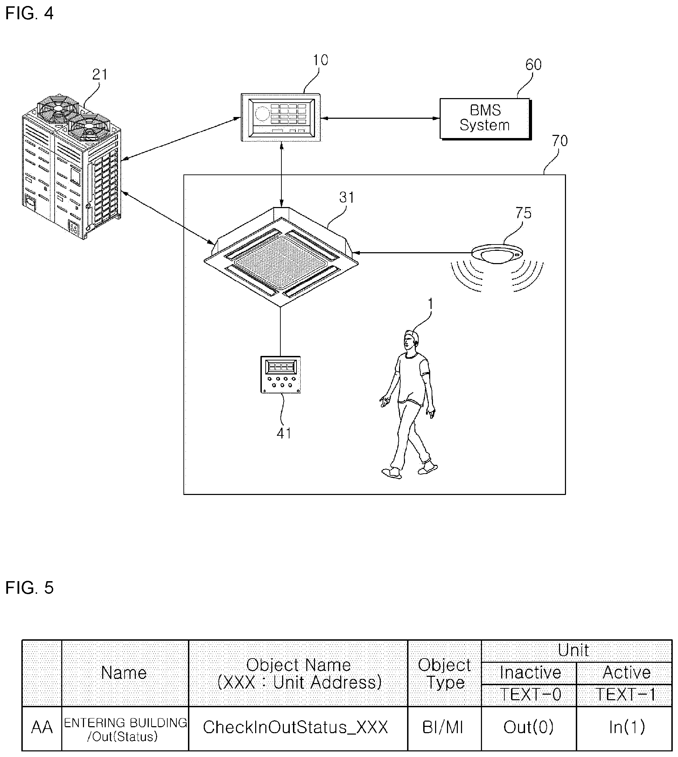

FIG. 4 is a conceptual diagram of the air conditioner system according to one embodiment of the present disclosure.

Referring to FIG. 4, the air conditioner system 50 according to one embodiment of the present disclosure includes the indoor unit 31 and a central controller 10 for controlling the operation of the indoor unit 31, and may provide an air conditioning service that realizes a comfortable environment by controlling and maintaining temperature and humidity in a building.

The plurality of indoor units 31 may be provided to be dispersedly disposed in the air-conditioning spaces of the building. The indoor unit 31 may control and maintain the temperature and humidity of an air-conditioning space 70 disposed in connection with the outdoor unit 21. The outdoor unit 21 may be driven by the request of the central controller 10 or the indoor unit 31.

The central controller 10 may be connected to the plurality of indoor units (31 to 36 in FIG. 1) and the plurality of outdoor units (21 and 22 in FIG. 1) to monitor and control the operation thereof. In this case, the central controller 10 may be connected to the plurality of indoor units 31 to 36 to perform operation setting, lock setting, schedule control, group control, and the like for the indoor units.

The air conditioner system 50 may include, in addition to the indoor unit and the outdoor unit, a ventilation device, an air cleaning device, a humidifier, a heater, and the like, and may further include units such as a chiller, an air conditioning unit, and a cooling tower depending on the scale. The air conditioner system 50 may operate in conjunction with the operations of the indoor unit and the outdoor unit by interconnecting each unit.

In addition, the air conditioner system 50 may operate in conjunction with a building management system 60 for integrated management of the facilities of the building. The air conditioner system 50 may operate under the control of the building management system 60 or may operate based on data received from the building management system 60.

For example, the central controller 10 in the air conditioner system 50 may transmit state information of the plurality of indoor units 31 to 36 and the plurality of outdoor units 21 and 22 to the building management system 60.

In addition, the central controller 10 may receive, from the building management system 60, information related to various facilities in the building, and use the information to control the indoor units 31 to 36 and the outdoor units 21 and 22.

In addition, the central controller 10 may receive a control signal for one or more units in the air conditioner system 50 from the building management system 60 and control the operation of the unit according to the received control signal.

In addition, the air conditioner system 50 may operate in connection with a mobile device, a security device, an alarm device, and the like inside a building. According to an embodiment, the indoor unit 31 arranged in a predetermined space 70 in a building may receive sensing data related to the detection of the user 1 detection from the occupancy detection sensor 75 arranged in the same space 70. In some cases, the sensing data of the occupancy detection sensor 75 may be transmitted to the central controller 10, and the indoor unit 31 may operate under the control of the central controller 10.

For example, the occupancy sensor 75 may use a Passive InfraRed (PIR) sensor. The PIR sensor is a sensor that detects an object having an infrared ray and includes an infrared emitter and a light receiver. When the infrared ray emitted from the infrared emitter is reflected from the person, the light receiving sensor may sense the reflected light to detect where the person is in a room. Alternatively, the occupancy sensor 75 may use a sensor of another type, such as an impulse response-ultra wide band (IR-UWB).

The air conditioner system 50 may further include the remote control unit 41 connected to the indoor unit 31, and the user 1 may operate the indoor unit 31 by operating the remote control unit 41.

According to an embodiment of the present invention, the central controller 10 may acquire building entry information of the user 1 associated with the predetermined space 70 in the building. For example, the user 1 associated with the predetermined space 70 in the building may be a predetermined guest room user of a lodging facility such as a hotel, a predetermined office worker of an office building, and the like.

The central controller 10 may obtain the building entry information of the user 1 from the building management system 60 or other sensors.

FIG. 5 illustrates an example of information transmission of the air conditioner system and the building management system according to one embodiment of the present disclosure, and illustrates a signal indicating whether a person enters a building.

The building management system 60 may transmit whether the user 1 enters the building to the central controller 10 through BMS communication.

Meanwhile, the building management system 60 may mainly use open networks such as Building Automation and Control net (BACnet) and Local operating network works (Lonworks) to facilitate the integration of the facilities in the building.

FIG. 5 illustrates an example of transferring hotel guest information through BACnet BMS communication to BMS communication (BACnet Object), BACnet Object number: AA may indicate whether the customer enters the building, and check-in/out information may indicate whether the customer enters the building.

Meanwhile, the central controller 10 may transmit the building entry information of the user 1 to the indoor unit 31 disposed in the predetermined space 70.

The indoor unit 31 arranged in a predetermined space 70 may receive the building entry information of the user 1 from the central controller 10.

In addition, the indoor unit 31 may receive whether the user 1 is in a room through the occupancy sensor 75 disposed in the central controller 10 or a predetermined space 70. In some cases, the sensing data of the occupancy sensor 75 may be transmitted through the central controller 10.

Alternatively, the indoor unit 31 may determine whether the user 1 is in a room by a sensing means such as a camera or a sensor provided.

Meanwhile, when the building is a lodging facility and the predetermined space 70 is a guest room, the indoor unit 31 may determine whether the user is in the guest room based on whether or not a guest room card key is detected from a guest room card key sensing device (not illustrated).

The indoor unit 31 may operate in an operation mode corresponding to whether the user 1 enters the building and whether the user 1 is in the predetermined space 70.

The indoor unit 31 may determine a current state of the user 1 based on whether the user 1 enters the building and whether the user 1 is in the predetermined space 70, and may be operated in an optimal operation mode for the current state of the user 1 among preset operation modes.

That is, the air conditioner system 50 according to an aspect of the present invention includes the central controller 10 configured to obtain the building entry information of the user associated with the predetermined space 70 inside the building, and the indoor unit 31 disposed in the predetermined space to receive the building entry information of the user 1 from the central controller and operated in the operation mode corresponding to whether the user 1 enters the building and whether the user is in the predetermined space. Therefore, the air conditioner system can be operated in the optimal operation mode by combining whether the user enters the building and whether the user is in the predetermined space.

According to an embodiment, the indoor unit 31 receives a control signal from the central controller 10 to operate in the operation mode corresponding to whether the user 1 enters the building and whether the user is in the predetermined space 70. In this case, the indoor unit 31 may operate in an operation mode according to the control of the central controller 10.

That is, the air conditioner system 50 according to one aspect of the present disclosure includes the central controller 10 configured to obtain the building entry information of the user associated with the predetermined space 70 inside the building, and the indoor unit disposed in the predetermined space 70 and configured to transmitting whether the user is in the predetermined space 70 to the central controller 10, in which the central controller 10 controls the indoor unit 31 so that the indoor unit 31 is operated in the operation mode corresponding to whether the user 1 enters the building and whether the user is in the predetermined space. Therefore, the air conditioner system can be operated in the optimal operation mode by combining whether the user enters the building and whether the user is in the predetermined space.

According to an embodiment of the present invention, the indoor unit 31 operates in the optimal operation mode by combining whether the service target user 1 enters the building and whether the user is in the room, and thus, it is possible to improve user satisfaction and energy efficiency.

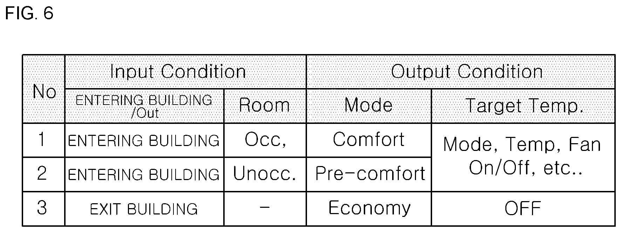

FIG. 6 illustrates an operation mode for each situation of the air conditioner system according to one embodiment of the present invention.

Referring to FIG. 6, when the user 1 is in the building and is in the predetermined space 70, the indoor unit 31 may be operated in a first mode in which a set value is predetermined for a predetermined number of setting items among setting items set in relation to the indoor unit 31.

The first mode may be a comfort mode that provides sufficient cooling or heating according to season and temperature when the building entry condition and the occupancy condition in the building of the service target user 1 are satisfied.

In this case, the setting items set in the first mode may be a mode (Mode), a temperature (Temp), a fan on/off (Fan On/Off), and the like.

Since the service target user 1 is already in the air-conditioning space 70 in the first mode, the indoor unit 31 may operate to provide sufficient cooling or heating.

Meanwhile, when the user 1 is in the building and is not in the predetermined space 70, the indoor unit 31 may operate in a second mode with less energy consumption than the first mode.

The second mode is a mode in which the building entry condition of the service target user 1 is satisfied and the occupancy condition of the service target user 1 is not satisfied, and in the second mode, the service target user 1 may be in the building, may be in another space in the building, or may be moving to the air-conditioning space 70. Even in this case, since sufficient cooling or heating causes energy waste, the indoor unit 31 may operate in the second mode with less energy consumption than the first mode.

The second mode is an operation mode with less energy consumption than the comfort mode, and the second mode is converted to a comfort mode when the service target user 1 in the building comes to the air-conditioning space 70, and thus, may be called a pre-comfort mode.

Meanwhile, when the user 1 is not in the building, the indoor unit 31 operates in a third mode in which energy consumption is minimum among the plurality of operation modes. The third mode is a mode for saving energy consumption and may also be referred to as an economy mode.

The third mode is operated in a case where the service target user 1 is not in the building, and is a mode for minimizing energy consumption. A manager may set the operation mode to turn off the minimum number of indoor units 31 as the third mode, or set to perform minimum cooling or heating to maintain minimum temperature and humidity even in an unused space.

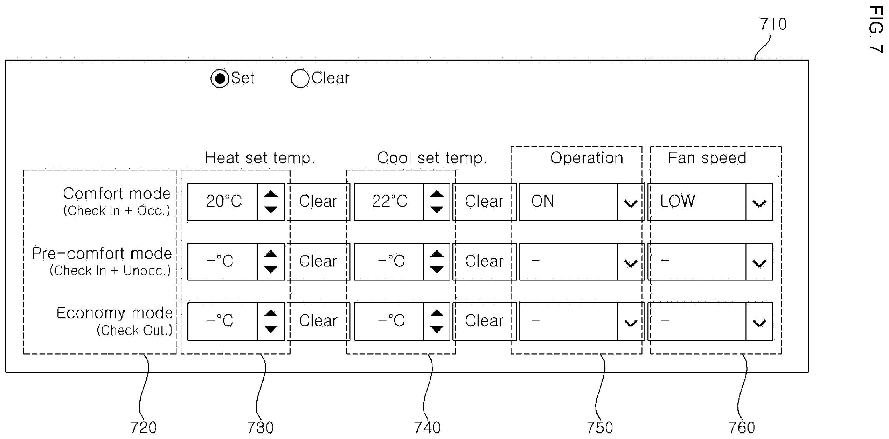

FIG. 7 is an example of a setting user interface screen of the operation mode of the air conditioner system according to one embodiment of the present invention.

Referring to FIG. 7, the setting user interface screen may include a corresponding function setting item 710, a mode name item 720, a desired heating temperature item 730 for each mode, a cooling desired temperature item 740, an operation on/off item 750, and a desired air volume item 760.

The corresponding function setting item 710 is to set whether to use an automatic operation mode function based on user pattern information such as whether the user enters a building or whether the user is in the room according to one embodiment of the present invention.
- Set: Use corresponding function
- Clear: Not using corresponding function

As described with reference to FIG. 6, the mode name item 720 is an operation mode name item for each scenario based on user pattern information such as whether the user enters the building or whether the user is in the room.

The setting items 730, 740, 750, and 760 for each mode are specific setting items of the first to third modes, and the items of FIG. 7 are exemplary.

Meanwhile, a predetermined number of setting items configurable in the first to third modes may be selected based on a frequency of use.

Here, the frequency of use may be based on an indoor unit operation history or an operation history for a plurality of indoor units in the building of the user.

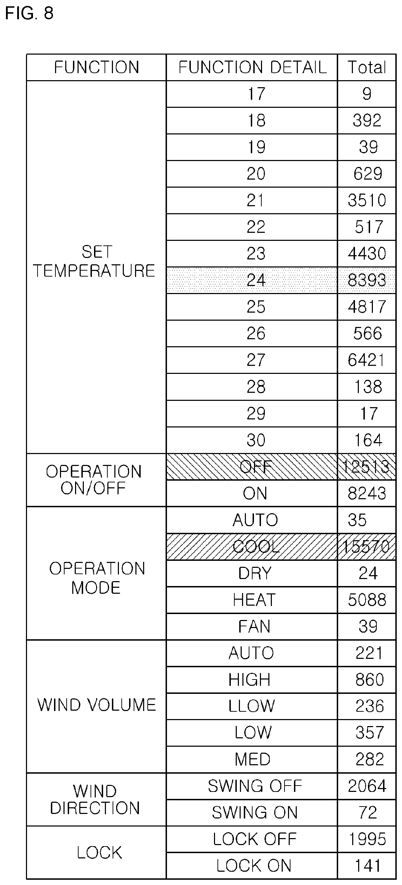

FIG. 8 is a diagram referenced in the description of the setting of the operation mode of the air conditioner system according to one embodiment of the present disclosure.

FIG. 8 illustrates the frequency of use data for each function setting item collected within a predetermined period, and it can be confirmed that three functions 'temperature setting', 'operation On/Off', and 'operation mode' occupy more than 90% of the total frequency.

In addition, it can be seen that 'Operation On/Off' and 'Operation Mode' are highly related with each other, and the manager is sensitive to energy management by setting Off more than On and setting the temperature to 23° to 24°.

In addition, 'temperature setting' is a function that is mainly controlled independently, and the probability of controlling other functions during temperature control is low, and the probability of using the other six functions at the same time is remarkably low at 4% of the total.

Therefore, the air conditioner system 50 according to one embodiment of the present invention does not select all function setting items as setting items to be used in the first to third modes, but may select only a predetermined number of setting items based on the frequency of use. Accordingly, the air conditioner system 50 according to one embodiment of the present invention can operate more efficiently by preventing unnecessary settings and operations.

According to one embodiment, the set value may be based on the indoor unit operation history or the operation history for the plurality of indoor units in the building of the user. In other words, the frequency of use is not used only for selection of setting items, but also the frequency of use can be used for specific set values.

Setting items and set values included in each mode can be programmed in advance based on the frequency of use. According to one embodiment, it may be implemented so that setting items and set values can be changed by reflecting the frequency of use after programming.

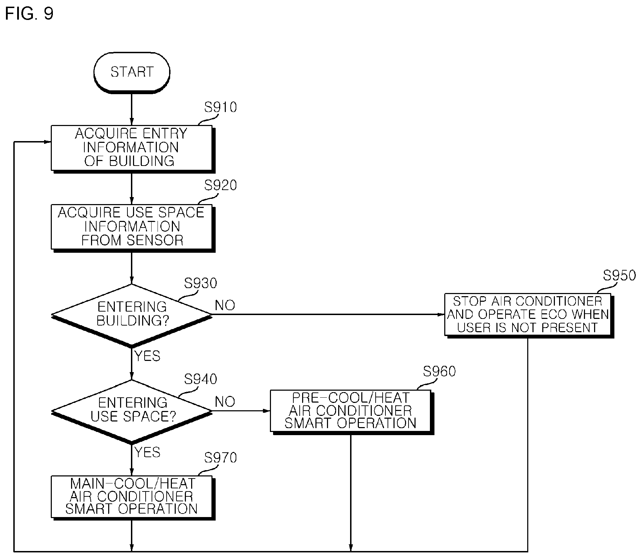

FIG. 9 is a flowchart illustrating a method of operating the air conditioner system according to one embodiment of the present invention**.**

The air conditioner system 50 according to one embodiment of the present invention interlocks with the building management system 70 and pre-programs for a pattern information (for example, entry/exit information of the building, occupancy/absence information in a space, temperature setting information, or the like) of a customer by the central controller 10 in a space where customers can be located, such as residential, lodging, and office that can be air-conditioned, and thus, a more comfortable state can be provided to customers through the cooling/heating operation, pre-cooling/heating operation, and comfortable energy control in the space.

Referring to FIG. 9, the central controller 10 may acquire information on entering the building of the service target user 1 from the building management system 70 (S910).

For example, in a case of an accommodation, check-in and check-out information of a customer at the front desk of the accommodation may be registered in the building management system 70, and the building management system 70 may transmit the check-in and check-out information to the central controller 10.

The indoor unit 31 may acquire occupancy information on the use space from the occupancy sensor 75 (S920).

For example, the indoor unit 31 may transmit occupancy/absence information received from the occupancy sensor 75 in the guest room to the central controller 10.

Alternatively, the indoor unit 31 may determine whether the user is in the use space with the provided camera or sensor and transmit the occupancy/absence information to the central controller 10.

The central controller 10 may configure three scenarios by combining two pieces of information, and the first to third modes may be set as driving modes in response to the three scenarios.

The central controller 10 may set the air conditioner operation state according to three scenarios to the guest room indoor unit 31 to control the indoor unit so that the indoor unit is automatically operated.

Alternatively, according to one embodiment of the present disclosure, the central controller 10 may transmit the check-in and check-out information to the indoor unit 31 disposed in the guest room of the guest.

The indoor unit 31 receiving the combination of the check-in and check-out information and the occupancy detection information from the central controller 10 may operate in first to third modes corresponding to three scenarios.

When the service target user 1 enters the building (S930) and also enters the use space 70 (S940), the indoor unit may be operated in the first mode described above to achieve sufficient cooling or heating (S970).

When the service target user 1 enters the building (S930) and does not enter the use space 70 (S940), preliminary cooling or heating may be performed in the second mode described above (S960).

When the service target user 1 is not in the building (S930), cost reduction may be achieved through the minimum operation preset in the third mode described above (S950).

According to the embodiments of the present invention, by pre-programming the pattern information (for example, entry/exit information of the building, occupancy/absence information, temperature setting information, or the like) of the customer, the control may be performed differently according to the customer's pattern. Accordingly, it is possible to improve energy efficiency while providing a pleasant environment to customers by appropriately responding to each state.

According to embodiments of the present disclosure, after the service target user 1 enters the building and before entering the use space 70, a comfortable environment is provided through a pre-heat/cool operation (S960), and the control is performed so that the air conditioner system 50 is not overloaded when a person is not present in the use space 70.

In addition, after adjusting the temperature to some extent through the preheat/cool operation, when a person enters the use space 70 (S940), it switches to the first mode (S960), and the service target user 1 can maintain the temperature of the use space 70 at the desired temperature at a faster speed.

In addition, even when the service target user (1) goes out of the building (S930), it is possible to maintain a constant temperature with the minimum economical operation (S950) according to the setting to prevent freezing and overheating of the building and overheating, and the air conditioner system 50 is not overloaded.

Such efficient operation can reduce energy consumption.

Meanwhile, according to embodiments of the present disclosure, it is possible to innovatively improve communication efficiency and reliability of the air conditioner system 50 and the building management system 70 and reduce the overall cost.

In the prior art, in the case of a site in which the air conditioner system 50 is interlocked with the building management system 70, an engineer who manages the building management system 70 collects the customer's requirements for air-conditioning control, creates the control point illustrated in FIG. 5 for all items in order to realize the requirements, and program for the control point.

Therefore, in order to reflect the detailed state of the customer's pattern information of various users, the BMS engineer needs to program herself/himself, which has a problem in that it takes extra cost and time for programming.

In addition, since only limited basic functions can be used even when separate programming is performed, it is difficult to utilize advanced functions related to energy control and smart control of the air conditioner system 50. Accordingly, the air conditioner system 50 may be used inefficiently, and energy waste or complaints may occur.

In addition, since excessive communication between the central controller 10 and the BMS system 70 is required, an occurrence rate of a communication error is high due to excessive communication traffic.

Therefore, the embodiments of the present invention can dramatically reduce the communication amount between the central controller 10 and the BMS system 70 to innovatively reduce the communication error rate to improve communication efficiency/reliability.

In the air conditioner system according to the present invention, the configuration and method of the embodiments described above are not limitedly applicable, but all or some of the embodiments may be selectively combined and configured so that various modifications can be made to the embodiments.

Meanwhile, the method of operating an air conditioner system according to one embodiment of the present invention may be implemented as a processor-readable code on a processor-readable recording medium. The processor-readable recording medium includes all types of recording devices in which data readable by the processor is stored. In addition, the processor-readable recording medium is distributed in a computer system connected through a network, and thus, the processor-readable code can be stored and executed in a distributed manner.

In addition, in the above, a preferred embodiment of present invention has been illustrated and described, but present invention is not limited to the specific embodiment described above, various modifications can be made by a person with ordinary skill in the technical field to which the invention belongs without departing from the claims.

## Claims

1. An air conditioner system comprising:
a central controller (10) configured to obtain building entry information of a user (1) associated with a predetermined space (70) inside a building; and
an indoor unit (31) disposed in the predetermined space (70) and configured to transmit whether the user (1) is in the predetermined space (70) to the central controller (10),
wherein the central controller (10) controls the indoor unit (31) so that the indoor unit (31) is operated in an operation mode corresponding to whether the user (1) enters the building and whether the user (1) is in the predetermined space (70),
**characterized in that**:
when the user (1) is in the building and in the predetermined space (70), the indoor unit (31) is operated in a first mode in which a set value is predetermined for a predetermined number of setting items among setting items set in relation to the indoor unit (31),
the indoor unit (31) is operated in a second mode that consumes less energy than the first mode when the user (1) is in the building and is not in the predetermined space (70),
the indoor unit (31) is operated in a third mode in which energy consumption is minimal among a plurality of operation modes when the user is not in the building, and
the indoor unit (31) determines whether the user (1) is in a room through a provided camera or sensor or determines whether the user (1) is in the room based on sensing information received from an exterior presence detection sensor.

2. The air conditioner system of claim 1, wherein the predetermined number of setting items are selected based on a frequency of use.

3. The air conditioner system of claim 2, wherein the frequency of use is based on an indoor unit (31) operation history of the user (1) or an operation history of a plurality of indoor units (31) in the building.

4. The air conditioner system of claim 1, wherein the set value is based on an indoor unit operation history of the user (1) or an operation history for a plurality of indoor units (31) in the building.

5. An arrangement comprising an air conditioner system of claim 1 in a lodging facility comprising a guest room as a predetermined space (70), wherein, when a card key sensing device is arranged in the guest room, the indoor unit (31) determines whether the user (1) is in the guest room based on whether a guest room card key is sensed from the guest room card key sensing device.

6. The air conditioner system of claim 1, wherein the central controller (10) is configured to acquire the building entry information of the user (1) from a building management system (60) for integrated management of facilities of the building.

## Patentansprüche

1. Klimaanlagensystem, das aufweist:
eine zentrale Steuereinheit (10), die konfiguriert ist, Gebäudeeintrittsinformationen eines Benutzers (1) zu erhalten, die mit einem vorbestimmten Raum (70) in einem Gebäude verknüpft sind; und
eine Innenraumeinheit (31), die in dem vorbestimmten Raum (70) angeordnet ist und konfiguriert ist, an die zentrale Steuereinheit (10) zu übertragen, ob sich der Benutzer (1) im vorbestimmten Raum (70) befindet,
wobei die zentrale Steuereinheit (10) die Innenraumeinheit (31) steuert, sodass die Innenraumeinheit (31) in einem Betriebsmodus betrieben wird, in Entsprechung dazu, ob der Benutzer (1) das Gebäude betritt und ob sich der Benutzer (1) in dem vorbestimmten Raum (70) befindet,
**dadurch gekennzeichnet, dass**:
wenn sich der Benutzer (1) in dem Gebäude und in dem vorbestimmten Raum (70) befindet, die Innenraumeinheit (31) in einem ersten Modus betrieben wird, in dem ein eingestellter Wert für eine vorbestimmte Anzahl von Einstellungselementen aus Einstellungselementen, die bezüglich der Innenraumeinheit (31) eingestellt sind, vorbestimmt ist,
die Innenraumeinheit (31) in einem zweiten Modus betrieben wird, der weniger Energie als der erste Modus verbraucht, wenn sich der Benutzer (1) im Gebäude befindet und nicht im vorbestimmten Raum (70) befindet,
die Innenraumeinheit (31) in einem dritten Modus aus der Vielzahl von Betriebsmodi betrieben wird, in dem der Energieverbrauch minimal ist, wenn sich der Benutzer nicht im Gebäude befindet, und
die Innenraumeinheit (31) über eine bereitgestellte Kamera oder einen Sensor bestimmt, ob sich der Benutzer (1) in einem Raum befindet, oder basierend auf Erfassungsinformationen, die von einem Sensor zum Erfassen einer Außen-Anwesenheit empfangen wurden, bestimmt, ob sich der Benutzer (1) in dem Raum befindet.

2. Klimaanlagensystem nach Anspruch 1, wobei die vorbestimmte Anzahl an Einstellungselementen basierend auf einer Verwendungshäufigkeit ausgewählt werden.

3. Klimaanlagensystem nach Anspruch 2, wobei die Verwendungshäufigkeit auf einer Betriebshistorie einer Innenraumeinheit (31) des Benutzers (1) oder einer Betriebshistorie einer Vielzahl von Innenraumeinheiten (31) im Gebäude basiert.

4. Klimaanlagensystem nach Anspruch 1, wobei der eingestellte Wert auf einer Betriebshistorie der Innenraumeinheit des Benutzers (1) oder einer Betriebshistorie für eine Vielzahl von Innenraumeinheiten (31) im Gebäude basiert.

5. Anordnung, die ein Klimaanlagensystem nach Anspruch 1 in einer Wohneinrichtung aufweist, die ein Gästezimmer als einen vorbestimmten Raum (70) aufweist, wobei
wenn eine Kartenschlüssel-Erfassungseinrichtung im Gästezimmer angeordnet ist, die Innenraumeinheit (31) darauf basierend, ob ein Gästezimmer-Kartenschlüssel von der Gästezimmer-Kartenschlüssel-Erfassungsvorrichtung erfasst wird, bestimmt, ob sich der Benutzer (1) im Gästezimmer befindet.

6. Klimaanlagensystem nach Anspruch 1, wobei die zentrale Steuereinheit (10) konfiguriert ist, die Gebäudeeintrittsinformationen des Benutzers (1) aus einem Gebäudeverwaltungssystem (60) für die integrierte Verwaltung der Gebäudeeinrichtungen zu erfassen.

## Revendications

1. Système de conditionnement d'air comprenant :
un contrôleur central (10) configuré pour obtenir des informations d'entrée de bâtiment d'un utilisateur (1) associées à un espace prédéterminé (70) à l'intérieur d'un bâtiment ; et
une unité interne (31) disposée dans l'espace prédéterminé (70) et configurée pour transmettre au contrôleur central (10) des informations quant à savoir si l'utilisateur (1) est dans l'espace prédéterminé (70),
dans lequel le contrôleur central (10) commande l'unité interne (31) de telle sorte que l'unité interne (31) est actionnée dans un mode d'actionnement correspondant au fait de savoir si l'utilisateur (1) entre dans le bâtiment et si l'utilisateur (1) est dans l'espace prédéterminé (70),
**caractérisé en ce que** :
quand l'utilisateur (1) est dans le bâtiment et dans l'espace prédéterminé (70), l'unité interne (31) est actionnée dans un premier mode dans lequel une valeur fixée est prédéterminée pour un nombre prédéterminé d'éléments de réglage parmi des éléments de réglage fixés en relation avec l'unité interne (31),
l'unité interne (31) est actionnée dans un deuxième mode qui consomme moins d'énergie que le premier mode quand l'utilisateur (1) est dans le bâtiment et n'est pas dans l'espace prédéterminé (70),
l'unité interne (31) est actionnée dans un troisième mode dans lequel une consommation d'énergie est minime parmi une pluralité de modes d'actionnement quand l'utilisateur n'est pas dans le bâtiment, et
l'unité interne (31) détermine si l'utilisateur (1) est dans une chambre au moyen d'une caméra ou d'un capteur prévus ou détermine si l'utilisateur (1) est dans la chambre sur la base d'informations de détection reçues depuis un capteur de détection de présence extérieure.

2. Système de conditionnement d'air selon la revendication 1, dans lequel le nombre prédéterminé d'éléments de réglage est sélectionné sur la base d'une fréquence d'utilisation.

3. Système de conditionnement d'air selon la revendication 2, dans lequel la fréquence d'utilisation est basée sur un historique d'actionnement d'unité interne (31) de l'utilisateur (1) ou sur un historique d'actionnement d'une pluralité d'unités internes (31) dans le bâtiment.

4. Système de conditionnement d'air selon la revendication 1, dans lequel la valeur fixée est basée sur un historique d'actionnement d'unité interne de l'utilisateur (1) ou sur un historique d'actionnement pour une pluralité d'unités internes (31) dans le bâtiment.

5. Agencement comprenant un système de conditionnement d'air selon la revendication 1 dans une structure d'hébergement comprenant une chambre d'hôtes en tant qu'espace prédéterminé (70), dans lequel, quand un dispositif de détection de clé à carte est agencé dans la chambre d'hôtes, l'unité interne (31) détermine si l'utilisateur (1) est dans la chambre d'hôtes sur la base du fait de savoir si une clé à carte de chambre d'hôtes est détectée par le dispositif de détection de clé à carte de chambre d'hôtes.

6. Système de conditionnement d'air selon la revendication 1, dans lequel le contrôleur central (10) est configuré pour acquérir les informations d'entrée de bâtiment de l'utilisateur (1) depuis un système de gestion de bâtiment (60) destiné à une gestion intégrée d'installations du bâtiment.
